# EUROPÄISCHE PATENTANMELDUNG

(11) **EP 4 331 891 A1**
(43) Veröffentlichungstag der Anmeldung: **06.03.2024**
(21) Anmeldenummer: 22193269.2
(22) Anmeldetag: 31.08.2022
(51) Int. Cl.: B60L 3/12, B60L 5/24, B60L 5/28, B60L 5/36, B60L 5/42, B60L 9/00, B60L 50/53, B60L 53/14, B60L 53/30, B60L 53/36, B60L 53/65, B60L 53/66, B60K 1/04, B60M 1/32, B60M 1/34, B60M 7/00, G06Q 20/14, G06Q 50/06, G07C 5/08

(54) **SYSTEM ZUR ERFASSUNG DES ENERGIEBEZUGS EINES AN EINER OBERLEITUNG FAHRENDEN STRASSENFAHRZEUGS**

(71) Anmelder: Siemens Mobility GmbH, 81739 München (DE)
(72) Erfinder: Bode, Sebastian, 59229 Ahlen (DE); Kremser, Ronald, 3400 Klosterneuburg (AT); Perschl, Christian, 2123 Hautzendorf (AT); Pfliegl, Werner, 85579 Neubiberg (DE); Scheidl, Manfred, 3464 Hausleiten (AT); Stark, Thomas, 15569 Woltersdorf (DE)
(74) Vertreter: Siemens Patent Attorneys

(57) **Zusammenfassung**

Die Erfindung betrifft ein System zu Erfassung des Energiebezugs eines an einer Oberleitung fahrenden Straßenfahrzeugs wobei ein Stromabnehmer (PAN), ein Stromzähler (SZ), eine On-Board-Unit (OBU) und ein elektronisches Back-Office (ETBO) vorgesehen sind, bei dem weiterhin Stromabnehmer (PAN und Stromzähler (SZ) über eine Datenbusverbindung mit einer On-Board-Unit (OBU)verbunden sind und die On-Board-Unit (OBU)in ein Satellitennavigationssystem (GNSS) eingebunden ist und über eine Mobilfunkverbindung (GSM) mit einem Back-office (ETBO) verbunden ist.

## Beschreibung

Der sogenannte eHighway bildet ein elektrifiziertes Rückgrat für einen effizienten, lokal emissionsfreien Güterverkehr.

Die Technologie ist kompatibel mit anderen Antriebstechnologien für den Güterverkehr auf der Straße und offen für neue Transportsysteme wie beispielsweise automatisiert fahrende Großraum-Lastzüge. Das System kann folglich zeitnah einen erheblichen Beitrag zur Reduktion der Emissionen leisten und dabei die Entwicklung zukünftiger Technologien unterstützen.

Kernelement des Systems ist ein intelligenter Stromabnehmer in Kombination mit einem Hybridantrieb oder einem reinen Elektroantrieb. Entsprechend ausgerüstete Lkws, wie z.B. Zugmaschinen für Sattelauflieger beziehen auf dem eHighway elektrische Energie für die Fahrmotoren und das Laden der Batterie aus den Oberleitungen und fahren dann lokal emissionsfrei.

Überhol- und Ausweichmanöver werden mit Hilfe der fahrzeugseitigen Energiespeicher überwunden. Diese können in ihrer Größe den betrieblichen Anforderungen angepasst werden. Auf Straßen ohne Oberleitungen treibt ein Hybridmotor die Lastwagen an.

Hierbei ist das System offen für unterschiedlichste Konfigurationen. So können serielle und parallele Hybridkonzepte mit unterschiedlichen Verbrennungsmotoren oder Brennstoffzellen ebenso realisiert werden, wie rein elektrische Fahrzeuge.

Ein Sensorsystem ermöglicht dem Stromabnehmer, bei einer Geschwindigkeit bis 90 km/h den Kontakt zur Oberleitung herzustellen und zu unterbrechen.

Die Abrechnung von Nutzungskosten für die Infrastruktur wird heute im Schwerlastverkehr mittels unterschiedlicher Mautsysteme erfasst und abgerechnet.

Mit Einführung der neuen eHighway Technologie tritt neben der Erhebung von Gebühren für die Straßennutzung die Erfassung der aus der Infrastruktur entnommenen Energiemenge mit auf.

Um den Energiebezug eines Fahrzeuges im Umfeld eHighway abrechnen zu können, werden technische Systeme benötigt, welche die Erfassung der aus einer Oberleitung entnommenen oder zurückgespeisten Energiemenge aufzeichnen und die relevanten Datensätze an eine Abrechnungszentrale senden zum Zwecke der Erstellung einer Abrechnung für verschiedene Akteure.

Allerdings nutzen die Fahrzeuge bei ihrer Fahrt durch das eHighway-Streckennetz verschiedene Energieversorgungsnetze welche von unterschiedlichen Energieversorgern mit Strom beliefert werden.

Außerdem soll vorgesehen sein, dass ein Fahrzeughalter kaufmännisch seine Energie von einem Energieversorger bezieht, wenngleich der jeweils lokal als Netzbetreiber aktive Energieversorger die Energie technisch liefert.

Dieser Ansatz ermöglicht es einem Fahrzeughalter nur eine Rechnung zu bekommen und die Energie zu gleichbleibenden Konditionen zu beziehen erfordert aber eine Abrechnung der beteiligten Energieversorger untereinander.

Somit wäre eine reine Aufzeichnung der gesamten Energiemenge mittels eines Energieerfassungsgerätes nicht ausreichend, der Energiebezug muss vielmehr auch den verschiedenen Energieversorgungsnetzen zugeordnet werden und mit dem jeweils zuständigen Netzbetreiber verrechnet werden.

Der Erfindung liegt daher die Aufgabe zugrunde, eine Lösung anzugeben, mit der der Energiebezug den einzelnen Energieversorgungsnetzen korrekt zugeordnet werden kann.

Erfindungsgemäß geschieht dies mit einem System zur Erfassung des Energiebezugs eines an einer Oberleitung fahrenden Straßenfahrzeugs gemäß Anspruch 1.

Vorteilhafte Ausgestaltungen der Erfindung sind in den Unteransprüchen enthalten.

Die Vorteile der erfindungsgemäßen Lösung sind wie folgt:
Das System basiert auf heute bereits etablierten Mauterfassungssystemen. Durch die Verwendung und Erweiterung dieser-Mauterfassungssysteme müssen keine wesentlichen Änderungen an den Prozessen zur Gebührenerhebung durchgeführt werden. Kunden, welche bereits heute am Mautsystem teilnehmen sind mit den Prozessen vertraut.

Durch die Art der Datenerhebung ist eine eichrechtliche Prüfung nur für den Stromabnehmer PAN und den Stromzähler SZ notwendig. Alle anderen Systemkomponenten wie z.B. die On-Board-Unit OBU oder das Back-Office ETBO sind davon nicht betroffen. Dadurch ergibt sich eine erheblich einfachere Einführung des Systems zum Markthochlauf, da die notwendigen Zertifizierungen nur den Stromabnehmer PAN und den Stromzähler SZ betreffen. Andere Systemkomponenten wie die On-Board-Unit OBU und die Zentralenanwendung, das Back-Office ETBO bleiben davon unberührt, damit sind auch keine Änderungen der Zertifizierungsrichtlinien für diese Komponenten notwendig.

Softwareänderungen auf den On-Board-Units OBU müssen nur hinsichtlich Ihres Einflusses auf die Mauterhebung rezertifiziert werden. Sie bleiben von der zusätzlichen Übertragung der Energiedaten unberührt.

Die Erfindung wird anhand von Figuren näher erläutert. Es zeigen beispielhaft:
Fig. 1 schematisch ein erfindungsgemäßes System und
Fig. 2 schematisch einen Ablauf der erfindungsgemäßen Erfassung des Energiebezugs.

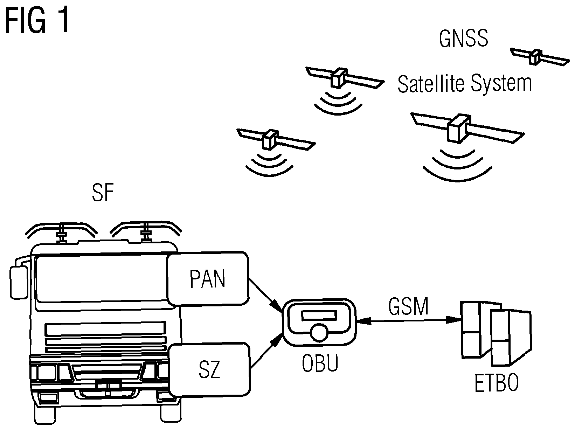

Das erfindungsgemäße System zur Erfassung des Energiebezugs eines an einer Oberleitung fahrenden Straßenfahrzeugs SV gemäß Fig. 1 umfasst einen Stromabnehmer PAN, einen Stromzähler SZ, eine On-Board-Unit OBU und ein elektronisches Back-Office ETBO.

Stromabnehmer PAN und Stromzähler SZ sind über eine Datenbusverbindung BUS mit einer On-Board-Unit OBU verbunden.

Als Datenbusverbindungen sind CAN-Bus, RS-485 und Ethernet vorteilhaft einsetzbar.

Das CAN-Bussystem ist ein serielles Feldbussystem, welches in ISO 11898-1 international standardisiert ist. Die beiden gängigsten Realisierungen der physischen Schichten sind nach ISO 11898-2 (Highspeed physical layer) und ISO 11898-3 (Fault tolerant physical layer) definiert. Der CAN-Bus arbeitet nach dem "Multi-Master-Prinzip" d. h., er verbindet mehrere gleichberechtigte Steuergeräte.

RS-485, auch als EIA-485 bezeichnet, ist ein Industriestandard für eine physische Schnittstelle für die asynchrone serielle Datenübertragung.

RS-485 benutzt ein Leitungspaar, um den invertierten und einen nichtinvertierten Pegel eines 1-Bit-Datensignals zu übertragen. Am Empfänger wird aus der Differenz der beiden Spannungspegel das ursprüngliche Datensignal rekonstruiert. Das hat gegenüber ähnlichen seriellen Übertragungsverfahren wie RS-232 bzw. EIA-232 den Vorteil, dass sich Gleichtaktstörungen nicht auf die Übertragung auswirken und somit die Störsicherheit vergrößert wird.

Ethernet gemäß Standard IEEE 802.3 bezeichnet eine Technik für kabelgebundene Datennetze. Es ermöglicht den Datenaustausch in Form von Datenframes zwischen den in einem lokalen Netz angeschlossenen Geräten.

Die sogenannte On-Board-Unit OBUist eine elektronische technische Einrichtung, die eine eindeutige Identifizierung und Positionsbestimmung des Fahrzeuges mittels Satellitennavigation ermöglicht.

Mittels GSM/GPRS-Technologie ist weiterhin eine Kommunikation im Rahmen eines Mobilfunk-Netzes zur Übertragung der Daten zwischen dem Fahrzeug und weiteren Informationssystemen wie insbesondere einem Back-office möglich.

Herkömmliche On-Board-Units OBU, wie beispielsweise das Sitraffic Sensus Fahrzeuggerät, wie sie in Mautsystemen verwendet werden, benötigen keinerlei Anbindung zu weiteren Geräten im Fahrzeug oder zum Fahrzeug selbst. Lediglich die Stromversorgung und optional eine Verbindung zur Zündung des Motors existieren als externe Schnittstellen.

Erfindungsgemäß wird daher die Hardware einer herkömmlichen On-Board-Unit OBU um eine Datenbusverbindung BUS zu Stromabnehmer PAN und Stromzähler SZ ergänzt.

Vorzugsweise wird dabei als Datenbusverbindung BUS zu Stromabnehmer PAN ein CAN-Bus und zum Stromzähler SZ eine Ethernet- oder RS-485 Verbindung vorgesehen.

Die per Software realisierten Funktionalitäten der On-Board-Unit OBU, welche üblicherweise auf die Ermittlung und Weiterleitung der für eine Mautberechnung notwendigen Datensätze beschränkt sind, werden um die Ansteuerung der Schnittstellen, sowie die Erfassung und Weiterleitung der Energiebezugsdaten an das Back-Office ETBO ergänzt.

Das Back-Office ETBO empfängt und speichert die erhaltenen Daten in einer Datenbank ab. Die für die Erfassung von Mautgebühren relevanten Daten werden entsprechend dem Stand der Technik aufbereitet und für eine Mautabrechnung zusammengefasst.

Für die erfindungsgemäße zusätzliche Abrechnung des elektrischen Energiebezugs werden im Back-Office ETBO anhand einer Strecken ID, d.h. einer Kennung zur Identifikation des befahrenen Streckenabschnitts und einer Stromzähler ID zur Identifikation des betroffenen Fahrzeugs die Messwerte je Empfängergruppe (Spedition, LKW, Streckenbetreiber, Mobilitätsanbieter, Energieversorger) zusammengefasst und eine Abrechnung erstellt.

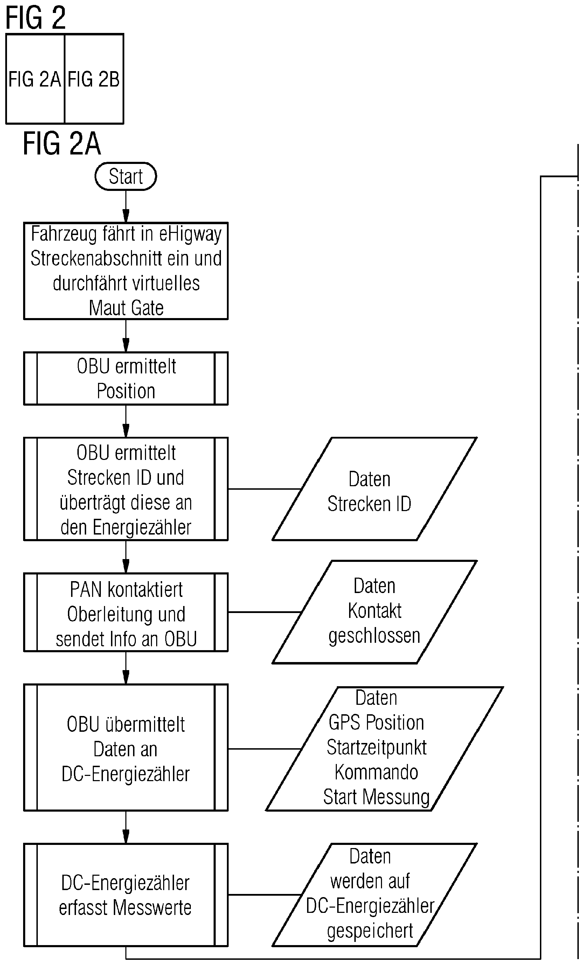

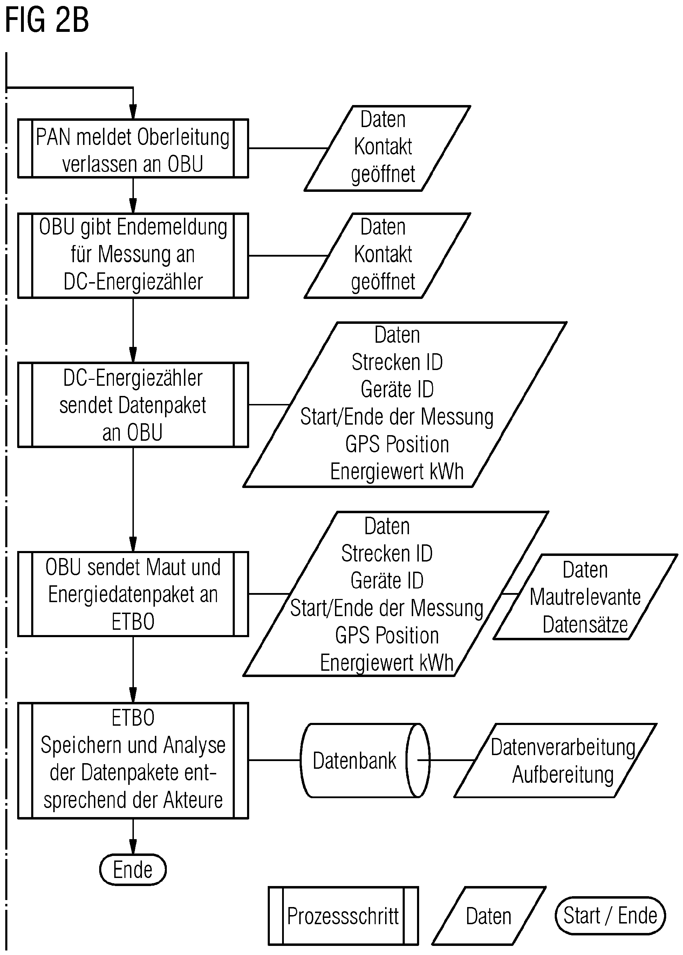

Der beispielhafte Ablauf der erfindungsgemäßen Erfassung des Energiebezugs wird anhand des Ablaufdiagramms gemäß Fig. 2 erläutert:
Ein Fahrzeug, welches mit den fahrzeugseitigen Komponenten Stromabnehmer PAN, Stromzähler SZ und On-Board-Unit OBU des erfindungsgemäßen Systems ausgestattet ist, fährt in einen eHighway Streckenabschnitt ein.

Dabei passiert das Fahrzeug ein virtuelles Maut-Gate, d.h. eine vorgegebene Position, welche durch die On-Board-Unit OBU mit ihrer Fähigkeit zur Positionsbestimmung festgestellt wird.

Die On-Board-Unit OBU ermittelt über eine Anfrage beim elektronischen Back-Office ETB via Mobilfunkverbindung die dem Streckenabschnitt zugeordnete Strecken ID.

Die On-Board-Unit OBU sendet die Strecken ID, den Zeitpunkt, und die GPS-Position an den Stromzähler SZ, welcher diese Information abspeichert.

Daraufhin wird der Stromabnehmer PAN angehoben, um einen Kontakt zur Oberleitung herzustellen.

Sobald der Kontakt hergestellt ist, wird eine entsprechende Information vom Stromabnehmer PAN zur On-Board-Unit OBU weitergeleitet, letztere sendet daraufhin ein Startsignal zum Stromzähler SZ, womit dieser mit der Erfassung der aus der Oberleitung entnommenen Energiemenge beginnt.

Nachdem der Kontakt zwischen Stromabnehmer PAN und Oberleitung abbricht, sendet die On-Board-Unit OBU eine Ende Meldung an den Stromzähler.

Der Stromzähler SZ übermittelt daraufhin in einemsignierten Datenpaket zu dem abgeschlossenen Messvorgang die Strecken ID, GPS-Position zum Startzeitpunkt, Stromzähler ID, sowie die Zeitpunkte von Start und Ende der Messung und den ermittelten Energiebezug an die On-Board-Unit OBU.

Die On-Board-Unit OBU sendet das vom Stromzähler SZ erhaltene Datenpaket unverändert mitsamt den mautrelevanten Datensätze an das Back-Office ETBO.

Dieser Vorgang wir bei jeder Kontaktierung innerhalb einer Strecken ID beliebig oft wiederholt.

Verlässt das Fahrzeug den eHighway durch Überfahren eines virtuellen Maut-Gates, übermittelt die On-Board-Unit OBU das Verlassen des Streckenabschnitts an den Stromzähler SZ und setzt die Strecken ID zurück.

Bei der Einfahrt in einen neuen Streckenabschnitt beginnt der Ablauf von neuem mit der entsprechend geänderten Strecken ID.

Es kann in einer alternativen Lösung vorgesehen sein, dass anstelle einer Strecken ID auch direkt eine GPS-Position oder eine sonstige Positionsinformation bereitgestellt wird

**Bezugszeichenliste**

| | |
|---|---|
| SV | Straßenfahrzeug |
| PAN | Stromabnehmer |
| SZ | Stromzähler |
| OBU | On-Board-Unit |
| GNSS | Satellitennavigationssystem |
| ETBO | Back-Office |
| CS | Verrechnungssystem |
| GSM | Mobilfunkverbindung |
| BUS | Datenbusverbindung |

## Patentansprüche

1. System zu Erfassung des Energiebezugs eines an einer Oberleitung fahrenden Straßenfahrzeugs, **dadurch gekennzeichnet, dass** ein Stromabnehmer (PAN), ein Stromzähler (SZ), eine On-Board-Unit (OBU) und ein elektronisches Back-Office (ETBO) vorgesehen sind, dass weiterhin Stromabnehmer (PAN) und Stromzähler (SZ) über eine Datenbusverbindung (BUS) mit der On-Board-Unit (OBU)verbunden sind und die On-Board-Unit (OBU)in ein Satellitennavigationssystem (GNSS) eingebunden ist und über eine Mobilfunkverbindung (GSM) mit dem Back-office (ETBO) verbunden ist.

2. System nach Anspruch 1, **dadurch gekennzeichnet, dass** als Datenbusverbindung (BUS) zu Stromabnehmer (PAN) ein CAN-Bus und zum Stromzähler (SZ) eine Ethernet- oder RS-485 Verbindung vorgesehen sind.

3. System nach Anspruch 1 oder 2, **dadurch gekennzeichnet, dass** der Datenverkehr zwischen Stromzähler (SZ) und On-Board-Unit (OBU) signierte Datenpakete umfasst, welche jeweils Informationen über eine Strecken ID, GPS-Position, Stromzähler ID, sowie die Zeitpunkte von Start und Ende und den ermittelten Energiebezug einer Messung umfassen.

4. System nach einem der vorhergehenden Ansprüche 1-3, **dadurch gekennzeichnet, dass** der Datenverkehr zwischen Stromzähler (SZ) und On-Board-Unit (OBU) verschlüsselte Datenpakete umfasst, welche jeweils Informationen über eine Strecken ID, GPS-Position, Stromzähler ID, sowie die Zeitpunkte von Start und Ende und den ermittelten Energiebezug einer Messung umfassen.

5. Straßenfahrzeug, **dadurch gekennzeichnet, dass** das Fahrzeug die fahrzeugseitigen Komponenten Stromabnehmer (PAN), Stromzähler (SZ) und On-Board-Unit (OBU) eines Systems nach einem der vorangehenden Ansprüche umfasst.

6. Verfahren zur Erfassung des Energiebezugs eines an einer Oberleitung fahrenden Straßenfahrzeugs mit einem System nach den Ansprüchen 1 bis 4, **dadurch gekennzeichnet, dass** folgende Schritte vorgesehen sind:
a. Nach der Passage eines virtuellen Maut-Gates ermittelt die On-Board-Unit (OBU) über eine Anfrage beim elektronischen Back-Office (ETBO) via Mobilfunkverbindung die dem Streckenabschnitt zugeordnete Strecken ID,
b.die On-Board-Unit (OBU) sendet die Strecken ID, den Zeitpunkt, und die GPS-Position an den Stromzähler (SZ), welcher diese Information abspeichert,
c. daraufhin wird der Stromabnehmer (PAN) angehoben, um einen Kontakt zur Oberleitung herzustellen.
d. die On-Board-Unit (OBU) sendet daraufhin ein Startsignal zum Stromzähler (SZ), womit dieser mit der Erfassung der aus der Oberleitung entnommenen Energiemenge beginnt,
e. nachdem der Kontakt zwischen Stromabnehmer (PAN) und Oberleitung abgebrochen ist, sendet die On-Board-Unit (OBU) eine Ende-Meldung an den Stromzähler (SZ).
f. Der Stromzähler (SZ) übermittelt daraufhin in einem verschlüsselten und signierten Datenpaket zu dem abgeschlossenen Messvorgang die Strecken ID, GPS-Position zum Startzeitpunkt, Stromzähler ID, sowie die Zeitpunkte von Start und Ende der Messung und den ermittelten Energiebezug an die On-Board-Unit (OBU).
Die On-Board-Unit (OBU) sendet das vom Stromzähler (SZ) erhaltene Datenpaket unverändert mitsamt den mautrelevanten Datensätze an das Back-Office (ETBO).
